# EUROPEAN PATENT APPLICATION

(11) **EP 4 489 203 A1**
(43) Date of publication of application: **08.01.2025**
(21) Application number: 23759910.5
(22) Date of filing: 20.02.2023
(51) Int. Cl.: H01M 50/367, H01G 11/10, H01G 11/78, H01M 50/209, H01M 50/213, H01M 50/317, H01M 50/342, H01M 50/35

(54) **POWER STORAGE MODULE**

(30) Priority: 28.02.2022 JP 2022029778
(71) Applicant: Panasonic Intellectual Property Management Co., Ltd., Kadoma-shi, Osaka 571-0057 (JP)
(72) Inventor: SAWADA, Koichi, Kadoma-shi, Osaka 571-0057 (JP); MURATSU, Jiro, Kadoma-shi, Osaka 571-0057 (JP)
(74) Representative: Novagraaf International SA
(86) International application number: PCT/JP2023/005910
(87) International publication number: WO 2023/162909

(57) **Abstract**

A power storage module includes a holder that houses a plurality of power storage devices, each including an exhaust valve, and includes an end face exposing the exhaust valves of the plurality of power storage devices; and a duct cover that covers the end face of the holder and the exhaust valves and forms an exhaust space with the end face. The duct cover includes at least one ridge protruding toward the end face of the holder and extending in a first direction parallel to the end face. The end face includes a groove or a notch that partly faces the at least one ridge and extends in a second direction intersecting the first direction.

## Description

### TECHNICAL FIELD

The present disclosure relates to a power storage module.

### BACKGROUND ART

For power storage devices such as lithium-ion cells, various factors, including overcharging and overcurrent, can contribute to gas generation inside the power storage device and an increase in internal pressure. A power storage device is prepared for such a situation by including an exhaust valve. When the internal pressure of the power storage device increases, the exhaust valve opens and releases gas, thus preventing the internal pressure of the power storage device from rising above a predetermined level.

Since voltage and cell capacity of the single power storage device are relatively low, plural battery cells are used to obtain a specified capacity and a specified output voltage by being connected in parallel and series. In that case, the specified number of power storage devices are often housed in a case to form a power storage module. The power storage module can have, inside the case, a passage for the gas released from each of the power storage devices. This passage for exhaust gas flow inside the case may be blocked, particularly when there is an external impact.

A battery pack described in PTL 1 uses plural secondary cells, which are exemplary power storage devices, and includes an exhaust duct and an exhaust port for emitting the gas released from the plural power storage devices, with a noise reduction part provided at the exhaust port.

### CITATION LIST

### Patent Literature

PTL 1: Japanese Patent Application Laid-open No. 2011-204574

### SUMMARY OF THE INVENTION

However, when the exhaust duct described in PTL 1 collapses due to an external impact on power storage modules, the exhaust valves of the power storage devices may be obstructed, for example, by an upper cover of the exhaust duct. The power storage devices obstructed by the upper cover or the like cannot perform sufficient gas release and can make it difficult for their internal pressure to increase.

A power storage module according to the present disclosure includes a holder that houses a plurality of power storage devices, each including an exhaust valve, and includes an end face exposing the exhaust valves of the plurality of power storage devices; and a duct cover covering the holder's end face the exhaust valves and forming a gas flow passage with the end face. The duct cover includes at least one ridge protruding toward the end face of the holder and extending in a first direction parallel to the end face. The end face includes one of a groove and a notch that partly faces the at least one ridge and extends in a second direction intersecting the first direction.

The power storage module according to the present disclosure has improved reliability.

### BRIEF DESCRIPTION OF THE DRAWINGS

FIG. 1 is an external perspective view schematically illustrating a configuration of battery module 10.
FIG. 2 is a perspective view illustrating battery module 10, with duct cover 20 removed.
FIG. 3 is a fragmentary plan view of battery module 10.
FIG. 4 is a diagram illustrating ridges 22 of duct cover 20 that are engaged in recesses of peripheral wall 16.
FIG. 5A is a diagram for showing how battery module 10 experiences a load applied from above, illustrating a state before the load application.
FIG. 5B is a diagram for showing how battery module 10 experiences the load applied from above, illustrating a state after the load application.
FIG. 6A is a diagram illustrating an exemplary cross-sectional shape of ridge 22, in which case the shape is triangular.
FIG. 6B is a diagram illustrating an exemplary cross-sectional shape of ridge 22, in which case the shape is quadrangular.
FIG. 6C is a diagram illustrating an exemplary cross-sectional shape of ridge 22, in which case the shape is semicircular.
FIG. 7 is a diagram illustrating how duct cover 20 behaves when experiencing force applied in a front-to-rear direction.
FIG. 8 is a diagram illustrating an example where ridges 22 extend diagonally.

### DESCRIPTION OF EMBODIMENT

With reference to drawings, a detailed description is hereinafter provided of an exemplary embodiment of a battery module that uses cylindrical cells, and which is given as an example of a power storage module according to the present disclosure. It is to be noted that the present disclosure encompasses configurations obtained by selectively combining the exemplary embodiment and plural modifications that are to be described below. Furthermore, power storage devices to be used in the power storage module according to the present disclosure are not limited to cylindrical cells and may be capacitors.

### Overall Configuration

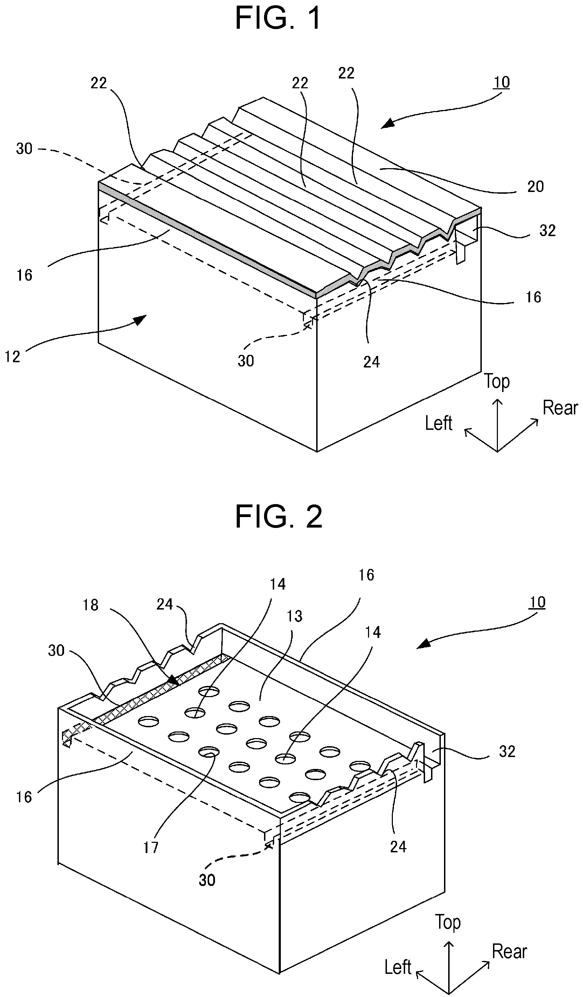

FIG. 1 is an external perspective view schematically illustrating a configuration of battery module 10, while in FIG. 2, duct cover 20 is removed.

Holder 12 is generally a rectangular parallelepiped, housing plural cells 14. Holder 12 includes plural vertically and cylindrically bored housing parts 15 where cells 14 are housed, respectively. Holder 12 includes plural through holes 17 formed in end face 13. These through holes 17 allow communication between an outside of holder 12 and corresponding housing parts 15 and are where cells 14 are exposed. In this example, each cell 14 is cylindrical but is not limited to the cylindrical shape. Each cell 14 may be, for example, prismatic. For example, each cell 14 may include an electrode body including a positive electrode and a negative electrode; an outer covering can housing the electrode body and an electrolyte; and a sealing plate closing an opening of the outer covering can via a gasket. The sealing plate is electrically connected to one of the positive and negative electrodes via a lead, and the outer covering can is electrically connected to the other of the positive and negative electrodes. The plural cells may be arranged, for example, in a staggered configuration where the cells are arranged in plural rows in a front-to-rear direction and are out of alignment in columns adjacent in a left-to-right direction.

Holder 12 includes upward projecting peripheral wall 16 along a peripheral edge (periphery) of end face 13, and this disposed peripheral wall 16 surrounds internal space 18. Disposed on an upper side of peripheral wall 16 is duct cover 20 serving as a lid for internal space 18 to be maintained above end face 13 (the upper face) of holder 12. Internal space 18 functions as a flow passage (described later) for exhaust gas from cells 14.

Plural cells 14 are electrically connected in parallel and series as appropriate. Therefore, although not illustrated, bus bars or the likes are provided in internal space 18, connecting cells 14. Holder 12 can be made of synthetic resin, and duct cover 20 can be made of metal, such as aluminum or aluminum alloy, or synthetic resin treated to withstand gas temperature and possess more strength than the material for holder 12.

Duct cover 20 herein includes plural parallel ridges 22 bulging downward (toward end face 13), having the overall shape of a corrugated plate. Duct cover 20 according to the present disclosure does not have to be corrugated plate-shaped. The ridges may be solid beam-like projections. In the example of FIG. 1, plural ridges 22 extend in the left-to-right direction (a first direction) from end to end. Peripheral wall 16, which extends upward from holder 12, includes on a left and a right side notch-like recesses 24 formed to correspond in shape to ridges 22 of duct cover 20, allowing ridges 22 to engage in and be housed. Various forming processes can be used to form such ridges 22.

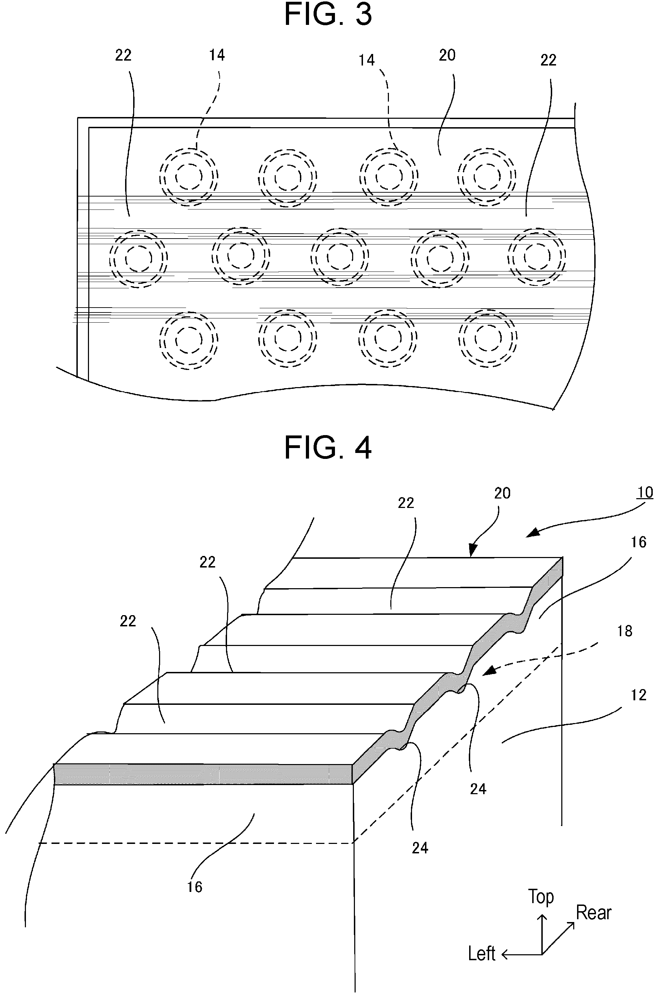

FIG. 3 is a fragmentary plan view of battery module 10, illustrating the arrangement of cells 14 with dashed lines and ridges 22 with plural thin lines. In this example, cells 14 are arranged in a staggered configuration and aligned into rows in the left-to-right direction, with downwardly sunk ridge 22 located between the rows.

FIG. 4 is a diagram illustrating duct cover 20 being supported by peripheral wall 16, with ridges 22 of duct cover 20 engaged in recesses 24 of peripheral wall 16. This engagement of ridges 22 of duct cover 20 in recesses 24 allows for positioning of duct cover 20 in the front-to-rear direction with respect to peripheral wall 16.

In FIGS. 1 and 3, side faces of duct cover 20 are gray-colored for convenience's sake.

In this configuration, internal space 18 is maintained above cells 14. Peripheral wall 16 partly includes exhaust port 32. Using this exhaust port 32 as an exhaust outlet, internal space 18 functions as the exhaust gas flow passage. Peripheral wall 16 may have exhaust port 32 anywhere (in any one of four sides if peripheral wall 16 is quadrangular). Peripheral wall 16 may have plural exhaust ports 32, instead of one exhaust port 32. Exhaust port 32 should be appropriately located, depending on where battery module 10 is disposed.

As illustrated in FIGS. 1 and 2, end face 13 of holder 12 includes recessed grooves 30 that extend in the front-to-rear direction (a second direction) and partly face leading end faces of ridges 22. In this example, recessed grooves 30, which are the grooves extending in the front-to-rear direction, are formed respectively at a left and a right end of the face of holder 12. Right end-side recessed groove 30 has a rear end bending rightward, and this end opens onto exhaust port 32 in a right wall. Exhaust port 32 is not only a corresponding place for recessed groove 30, but also is wide open, serving as the outlet for the exhaust from internal space 18. Recessed grooves 30 may be cutouts extending in the second direction, instead of being groove-shaped.

Recessed groove 30 that extends in the front-to-rear direction may be present only at the left end, a middle part, or the right end of the face of holder 12, or plural recessed grooves 30 may be provided. Recessed grooves 30 may be formed with breaks along a single straight line, provided that each recessed groove 30 has at least a specified length. Further adjacent. FIG. 2 illustrates shaded recessed groove 30 for convenience's sake. Recessed grooves 30 may be notch-shaped, instead of being groove-shaped. Recessed grooves 30 do not necessarily have to extend in the front-to-rear direction. When formed, recessed grooves 30 only need to extend in the second direction intersecting the first direction in which ridges 22 extend. Recessed grooves 30 should be longer than a dimension of the leading end face of each ridge 22 that is measured in the second direction. Vertical Impact

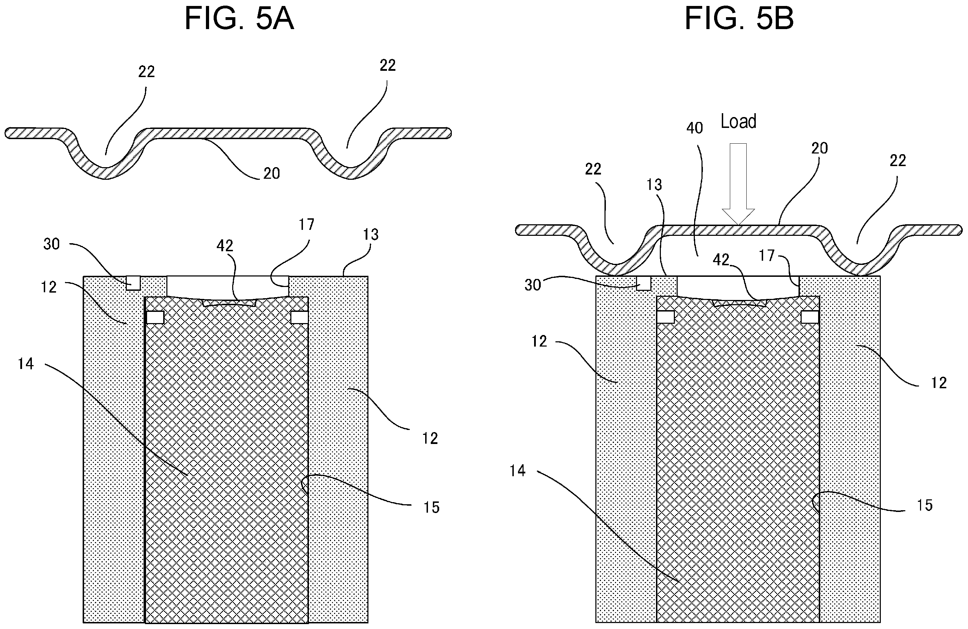

FIGS. 5A and 5B illustrate how duct cover 20 is pressed against the face of holder 12 due to a load applied to battery module 10 from above. Under normal conditions, duct cover 20 is supported by peripheral wall 16 and thus is positioned above holder 12, keeping internal space 18, as illustrated in FIG. 5A.

When a front-to-rear impact (the load from above) acts, metal duct cover 20, which is stronger than resin-made peripheral wall 16, destroys peripheral wall 16 and is pressed against the upper face of holder 12, as illustrated in FIG. 5B.

In the example given here, ridges 22 of duct cover 20 are vertically out of alignment with cells 14, being positioned to face the upper face of holder 12. Therefore, when duct cover 20 is pressed against end face 13 of holder 12, ridges 22 are pressed against end face 13 at their respective lower ends (leading ends). As a result, exhaust space 40 is formed between each pair of adjacent ridges, being secured above plural cells 14 aligned in the left-to-right direction. At this time, a part of the leading end of each ridge 22 in the first direction preferably abuts a remaining part of end face 13 where plural through holes 17 of holder 12 are not formed. By abutting the remaining part, ridges 22 facilitate stable securement of gas exhaust passages where gas release of cells 14 is not obstructed.

Duct cover 20 may have as many ridges 22 as required to each be between the rows of cells 14 or fewer ridges 22. Ridges 22 may extend in the front-to-rear direction or diagonally (described later).

Exhaust valve 42 is disposed at an upper end of each cell 14. This exhaust valve 42 is a valve that releases the internal gas when internal pressure of cell 14 increases. For exhaust valve 42, various configurations that are conventionally known can be adopted. For example, exhaust valve 42 may be such that a sealing plate partly includes a weak part that breaks when the internal pressure of cell 14 exceeds a predetermined value. Another alternative is that exhaust valve 42 may be of a self-reset type that reseals the cell after releasing the gas. Each cell 14 may include an exhaust section at a bottom of the outer covering can. The gas released from exhaust valve 42 is emitted out of battery module 10 through exhaust space 40 and exhaust port 32.

As described above, recessed grooves 30 are formed at the left and right ends of holder 12, extending in the front-to-rear direction. Exhaust spaces 40, each between ridges 22 of duct cover 20, extend in the left-to-right direction, and recessed grooves 30 serve as gas flow passages extending in the front-to-rear direction below ridges 22 of duct cover 20, connecting exhaust spaces 40 to exhaust port 32.

Therefore, even when duct cover 20 is pressed against holder 12, flow passages are ensured for the exhaust gas via exhaust spaces 40 and recessed grooves 30.

Since exhaust spaces 40 only need to be connected, each recessed groove 30 may be configured to connect corresponding adjacent exhaust spaces 40. In other words, exhaust spaces 40 and recessed grooves 30 may form an exhaust gas flow passage in a zigzag.

Holder 12 in the drawings is solid and resin-made and has vertically bored housing parts 15 for cells 14; however, various configurations can be adopted for holder 12 as long as cells 14 can be held.

While duct cover 20 has been described as being above holder 12, its position may be vertically reversed, in which case duct cover 20 is under holder 12, and exhaust spaces 40 and recessed grooves 30 are also formed at a lower side of holder 12.

### Shape of Ridge 22

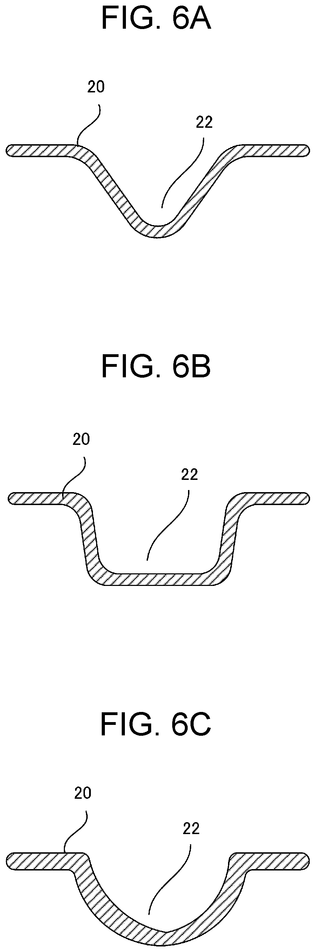

FIG. 6 provides exemplary cross-sectional shapes of ridge 22, with FIGS. 6A, 6B, and 6C illustrating a substantially triangular cross section, a quadrangular cross section, and a substantially semicircular cross section, respectively.

Each of these grooved shapes allows for securement of an exhaust gas flow passage when its bottom is pressed against the face of holder 12. Each ridge 22 may have a shape that tapers toward the leading end to facilitate the gas emission after abutting holder 12.

### Front-to-rear Force

In the present exemplary embodiment, duct cover 20 is provided with ridges 22 that extend in the left-to-right direction. Therefore, duct cover 20 can absorb front-to-rear force by bending.

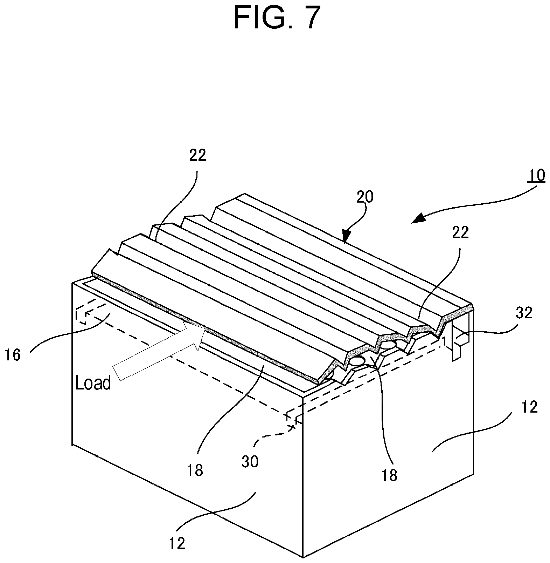

FIG. 7 is a diagram illustrating how duct cover 20 behaves when experiencing the force applied in the front-to-rear direction. As illustrated, duct cover 20 can bend in the front-to-rear direction, which is orthogonal to the direction of ridges 22, thereby absorbing the force. In this case, the bottom of each ridge 22 of duct cover 20 becomes disengaged from recesses 24 at both its left and right ends.

### Diagonal Grooves

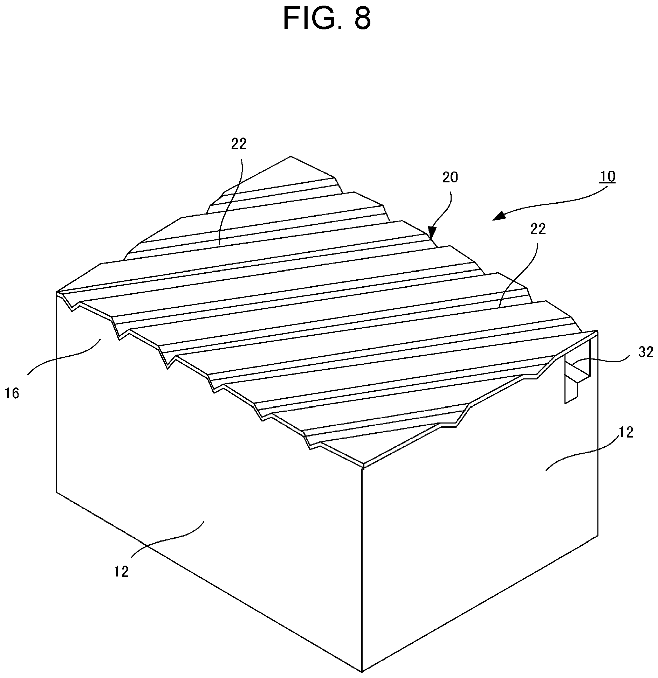

FIG. 8 is a diagram illustrating an example where ridges 22 extend diagonally. As illustrated, ridges 22 are formed diagonally with respect to the quadrangular shape of duct cover 20. This configuration also allows for the securement of exhaust spaces 40 when duct cover 20 is pressed against holder 12.

Ridges 22 are preferably arranged to correspond to the face of holder 12, not cells 14. In addition, recessed grooves 30 should provide communication between adjacent exhaust spaces 40 to allow every exhaust space 40 to communicate with exhaust port 32.

### REFERENCE MARKS IN THE DRAWINGS

10: battery module (power storage module)
12: holder
13: end face
14: cell (power storage device)
15: housing part
16: peripheral wall
17: through hole
18: internal space
20: duct cover
22: ridge
24: recess
30: recessed groove
32: exhaust port
40: exhaust space
42: exhaust valve

## Claims

1. A power storage module comprising:
a holder housing a plurality of power storage devices that include exhaust valves, the holder including an end face exposing the exhaust valves of the plurality of power storage; and
a duct cover covering an end face of the holder and exhaust valves and defining a gas flow passage with the end face, wherein
the duct cover includes at least one ridge protruding toward an end face of the holder and extending in a first direction parallel to the end face, and
the end face includes one of a groove and a notch that partly faces the at least one ridge and extends in a second direction intersecting the first direction.

2. The power storage module according to claim 1, wherein
the at least one ridge comprises a plurality of ridges;
a face of the duct cover that is opposite a face facing the end face has a plurality of recesses where the plurality of ridges are located, and
the duct cover is corrugated, with the plurality of ridges.

3. The power storage module according to claim 1, wherein
the holder includes along a periphery of the holder a peripheral wall projecting from the end face, and
the peripheral wall includes a recess allowing the at least one ridge to engage in and be housed.

4. The power storage module according to claim 1 or 2, wherein
the holder includes a plurality of housing parts where the plurality of power storage devices are housed and includes in the plural end faces a plurality of through holes allowing communication between an outside of the holder and insides of the plurality of housing parts, with exhaust valves of the plurality of power storage devices being exposed through a corresponding one of the plurality of through holes, the plurality of through holes being disposed at predetermined intervals, and
a leading end of the at least one ridge in the first direction at least partly overlaps with a remaining part of the end face where the plurality of through holes are absent.
